# EUROPEAN PATENT APPLICATION

(11) **EP 3 205 972 A1**
(43) Date of publication of application: **16.08.2017**
(21) Application number: 17155197.1
(22) Date of filing: 08.02.2017
(51) Int. Cl.: F41G 7/22, G02B 27/10, G01J 1/04, G02B 13/14, G01J 3/36, F41G 7/00, G02B 13/16, G02B 15/14, G01J 3/02

(54) **METASURFACE OPTICS FOR DUAL-MODE SEEKER**

(30) Priority: 10.02.2016 US 201615040302
(71) Applicant: Rosemount Aerospace Inc., Burnsville MN 55306-4898 (US)
(72) Inventor: ELL, Todd, Savage, MN Minnesota 55378 (US)
(74) Representative: Bridge, Kerry Ann

(57) **Abstract**

Apparatus and associated methods relate to using a metasurface optical lens (38) to split a narrow-band portion of the multichromatic light passing through an optical lens stack (36). The optical lens stack (36) is aligned along an optical axis and is configured to focus multichromatic light passing therethrough onto a target imaging region of a focal plane array (30), thereby forming a multichromatic image of a scene aligned with the optical axis. The metasurface optical lens (38) directs the split-off narrow-band portion of the multichromatic light to a laser designator imaging region of the focal plane array (30), thereby forming a narrow-band image of the scene aligned with the optical axis. Use of a metasurface optical lens (38) within the optical lens stack provides the creation of two images corresponding to two non-overlapping frequency bands of light to be formed using one optical lens stack (36).

## Description

### BACKGROUND

Metasurface optics are thin optical components that use subwavelength resonators to modify light (or electromagnetic waves) passing therethrough. Metasurface optics rely on a different mechanism for performing optical functions than is used in either diffractive or refractive optical components. Metasurface optics are typically two-dimensional optical structures that modify amplitude, phase and polarization of light that passes therethrough. Metasurface optics that have full two-pi phase control are versatile platforms that can produce a wide array of optical functionalities. Such metasurface optics can perform optical functions such as lensing, beam splitting, and other optical functions traditionally performed by refractive optical components. Metasurface optics can also perform functions that are otherwise impossible to perform using only refractive optical components.

Metasurface optics can be manufactured using many of the well-developed techniques developed by the semiconductor industry. As such, metasurface optics can be cost efficient elements of an optical system. Furthermore, metasurface optics can be manufactured on thin flat substrates. Such thin optical components can be space and/or weight efficient elements of an optical system.

### SUMMARY

A dual imaging system is configured to provide two images, each from a separate portion of light frequencies. The dual imaging system includes a focal plane array having a first imaging region of a first plurality of pixels and having a second imaging region of a second plurality of pixels. The dual imaging system includes an optical lens stack having a metasurface optical lens. The optical lens stack is configured to receive light from a scene aligned along an optical axis of the optical lens stack and to focus at least a first portion of the received light onto the first imaging region of the focal plane array thereby forming a first image of the scene. The first image includes first pixel data generated by the first plurality of pixels. The metasurface optical lens is configured to split a second portion of the received light and to direct the second portion of the received light to the second imaging region of the focal plane array thereby forming a second image of the scene. The second image includes second pixel data generated by the second plurality of pixels.

In some embodiments, the dual imaging system includes an image correlation system. The image correlation system includes a metric calculator configured to calculate a plurality of metrics using the second pixel data. Each of the calculated metrics corresponding to a different one of the second plurality of pixels of the second imaging region. The image correlation system includes a signal locator configured to determine, based on the calculated plurality of metrics, a designator pixel location within the second imaging region of the focal plane array. The image correlation system includes a target locator configured to identify a target pixel location within the first imaging region of the focal plane array. The identified target pixel location of the first imaging region corresponding to the determined designator pixel location of the second imaging region.

### BRIEF DESCRIPTION OF THE DRAWINGS

FIG. 1 is a schematic diagram of an exemplary scenario in which a precision guided weapon having a dual mode seeker with metasurface optics is deployed.
FIG. 2 is a perspective view of an exemplary dual mode seeker.
FIG. 3 is a schematic view of an exemplary dual imaging system of a dual mode seeker.
FIGS. 4A-4B are side elevation and plan view schematics of an exemplary dual imaging system of a dual mode seeker.
FIG. 5 is a schematic diagram of an exemplary dual imaging system with a metasurface formed on objective lens.

### DETAILED DESCRIPTION

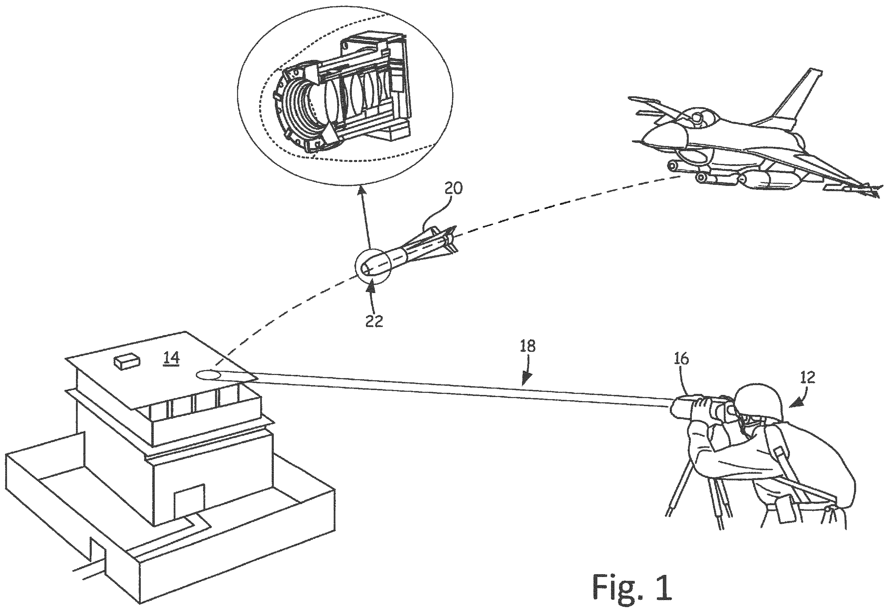

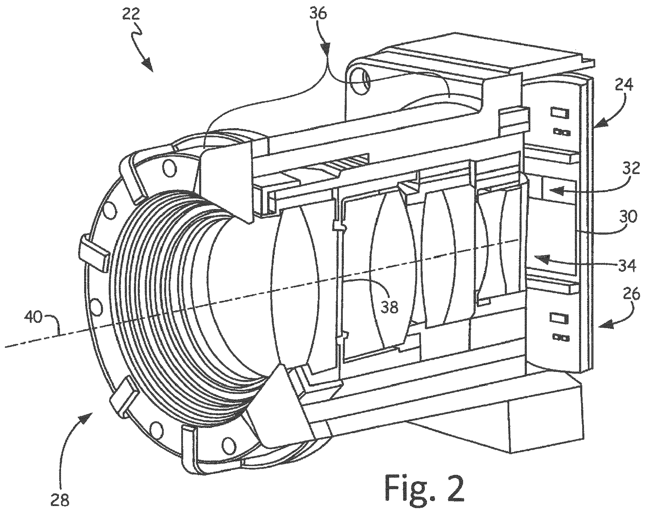

FIG. 1 is a schematic diagram of an exemplary scenario in which a precision guided weapon having a dual mode seeker with metasurface optics is deployed. FIG. 2 is a perspective view of an exemplary dual mode seeker depicted in greater detail than shown in FIG. 1. In exemplary scenario 10, as depicted in FIG. 1, forward observer 12 is "painting" or illuminating a desired target - designated target 14 - using laser target designator (LTD) 16 to provide a target illuminating signal - laser radiation 18 - that can be received by precision guided weapon 20. Precision guided weapon 20 can be launched, for example, from ground, sea, or air as is depicted in FIG. 1. Precision guided weapon 20 has dual mode seeker 22, which guides precision guided weapon 20 to a location from which laser radiation 18 reflects. Dual mode seeker 22 has Semi-Active Laser (SAL) image seeking subsystem 24 and passive image seeking subsystem 26. In FIG. 1, dual mode seeker 22 is depicted using SAL image seeking subsystem 24 to acquire designated target 14.

SAL image seeking subsystem 24 and passive image seeking subsystem 26 operate acquire designated target 14 using different technologies. With SAL image seeking subsystem 24, laser radiation 18 reflected from designated target 14 is received and processed to provide guidance commands to precision guided weapon 20. Laser radiation 18 may be generated and transmitted from laser target designator 16 manned by forward observer 12, for example. Forward observer 12 directs laser radiation 18 to designated target 14, thereby designating target 14. SAL image seeking subsystem 24 of precision guided weapon 20, which is remotely located from both designated target 14 and laser target designator 16, can then detect laser radiation 18 reflected from designated target 14. SAL image seeking subsystem 24 may include processing electronics for generating guidance commands to precision guided weapon 20. Such guidance commands may use a targeting direction derived from an image of laser radiation 18 reflected from the designated target 14 and imaged by SAL image seeking subsystem 24. SAL image seeking subsystem 24 can be used to identify designated target 14 and to guide precision guided weapon 20 to designated target 14. To achieve an optimally precise hit on designated target 14, forward observer 12 may designate designated target 14 until precision guided weapon 20 impacts designated target 14.

Passive image seeking subsystem 26 may rely on automatic target tracking algorithms that distinguish an image of designated target 14 from background clutter under ambient lighting conditions. Passive image seeking subsystem 26 may not require active designation by forward observer 12. Acquiring designated target 14 using passive image seeking subsystem 26 can be difficult in certain situations, though. Passive image seeking subsystem 26 may have difficulties, for example in certain weather conditions and/or when passive image seeking subsystem 26 is at great distances from designated target 14, as designated target 14 may be imaged onto one or few pixels of a focal plane array at such great distances. Passive image seeking subsystem 26 can use sophisticated Automatic Target Acquisition/Recognition (ATA/ATR) algorithms that require demanding processing resources. Being able to actively designate and to passively track (e.g., using image seeking subsystem 26) designated target 14 may eliminate the need for forward observer 12 to designate designated target 14 throughout the entire flight of precision guided weapon 20 till impact. Artificial intelligence routines that recognize designated target 14 from images can provide guidance information for precision guided weapon 20 as it nears designated target 14. Moreover, when passive image seeking subsystem 26 is passively tracking designated target 14, any rapid changes in illumination, as could be caused by laser radiation 18 from active laser target designator 16, can cause difficulties in target recognition.

In order to switch from using semi-active SAL image seeking subsystem 24 to passive image seeking subsystem 26 for tracking of designated target 14, images of designated target 14 for SAL seeking and image seeking subsystems 24, 26 can be concurrently provided, even while laser target designator 16 is active. Dual mode seeker 22 includes dual imaging system 28 to provide concurrent images for both SAL seeking and image seeking subsystems 24, 26.

SAL image seeking subsystem 24 and passive image seeking subsystem 26 share dual imaging system 28, which provides concurrent imagery to each of SAL image seeking subsystem 24 and image seeking subsystem 26. Each image provided can be used to locate designated target 14 and to guide precision guided weapon 20 to designated target 14. Dual imaging system 28 includes focal plane array 30 that has two imaging regions: i) first imaging region 32 to provide images for use by SAL image seeking subsystem 24; and ii) second imaging region 34 to provide images for use by image seeking subsystem 26. Dual imaging system 28 has optical lens stack 36 that has metasurface optical lens 38, which is inline with optical axis 40.

Metasurface optical lens 38 splits light received by lens stack 36 into two portions: i) a first portion directed to first imaging region 32 and ii) a second portion directed to second imaging region 34. The first portion includes wavelengths corresponding to those of laser radiation 18, so that first imaging region 32 may image laser radiation 18 reflected from designated target 14. The second portion may include wavelengths exclusive of those wavelengths of laser radiation 18. The second portion may include wavelengths corresponding to Short Wave InfraRed (SWIR) wavelengths for use in forming a multichromatic image on second imaging region 34.

Since SWIR imagers can detect both laser and ambient radiation, one set of optics and a single imager can be used for both laser radiation 18 and SWIR multichromatic wavelengths. The optics than can separate or beam split the laser radiation 18 from the SWIR wavelengths used for SAL and passive images, respectively. One such technique is to spatially divide the focal plane array into SAL and passive imaging regions. By incorporating metasurface optical lens 38, tuned to the specific laser wavelengths of a LTD, the received light corresponding to laser radiation 18 wavelengths can be re-centered and re-focused onto first imaging region 32 of focal plane array 30. Metasurface optical lens 38 can be effectively transparent (e.g., non-diffractive and non-refractive) to non-laser SWIR wavelengths, however, so that the non-laser wavelengths are focused onto second imaging region 34 of focal plane array 30 used for passive imaging (e.g., by other lenses in optical lens stack 36).

First and second imaging regions 32, 34 provide image data for different seeking subsystems. First imaging region 32 provides image data for SAL image seeking subsystem 24. Second imaging region 34 provides image data for image seeking subsystem 26. Each of SAL image seeking subsystem 24 and passive image seeking subsystem 26 may be used for different purposes or concepts of operation. Each of SAL image seeking subsystem 24 and passive image seeking subsystem 26 may have different requirements for how any image data is used and/or processed. For example, SAL image seeking subsystem 24 may require a high frame rate of image data corresponding to first imaging region 32. Such a high frame rate can be used to help determine the proper phasing of the image exposures so as to capture the low duty cycle of the Laser Target Designator (LTD) 16, which pulses at a predetermined pulse repetition interval. In such a mode of operation, frames within first imaging region 32 may be processed so as to identify specific frame or frames in which LTD 16 has "painted" or illuminated designated target 14.

Because image data of first imaging region 32 may be sampled at a high frequency, sophisticated image processing of such data may be difficult due to processing requirements for such sophisticated image processing. In some embodiments, SAL image seeking subsystem 24 may identify an image in which laser radiation is received by selecting an image that contains pixels with a response indicative of laser radiation. For example, a frame that has pixels indicative of a light intensity of greater than a predetermined threshold may correspond to a frame that receives laser radiation 18 generated by LTD 16 and reflected off designated target 14. To minimize conflation of laser radiation 18 with received light having wavelengths not within those of laser radiation 18, some embodiments will employ a narrow-band filter to obstruct wavelengths of received light energies that do not correspond to the wavelengths of laser radiation 18 generated by LTD 16 from impinging on first image region 32. By using such a narrow-band filter, pixel data differences may be maximized between frames receiving laser radiation 18 from LTD 16 and frames when no such laser radiation 18 is received.

Periodic illumination of designated target 14 by laser radiation 18 of LTD 16 can cause problems for such illuminated frames for image seeking subsystem 26. Some embodiments may use the timing information of laser radiation 18 determined by SAL image seeking subsystem 24 to control acquisition timing of image data of second imaging region 34 for use by image seeking subsystem 26. Passive image seeking subsystem 26 may time an acquisition of frame data so as to avoid any illumination by laser radiation 18 from LTD 16. Some embodiments may employ a notch filter to obstruct wavelengths of received light that correspond to the wavelengths of laser radiation 18 generated by LTD 16 from impinging on second imaging region 34.

FIG. 2 is a perspective view of an exemplary dual mode seeker. In FIG. 2, dual-mode seeker 22 includes a SAL image seeking subsystem 24, and image seeking subsystem 26. SAL image seeking subsystem 24 and passive image seeking subsystem 26 share dual imaging system 28. Dual imaging system 28 includes focal plane array 30, optical lens stack 36, and first and second light filters 42, 44. Focal plane array 30 includes first imaging region 32 and second imaging region 34. First and second imaging regions 32, 34 are configured to provide first and second image data for SAL image seeking subsystem 24 and image seeking subsystem 26, respectively. Optical lens stack 36 is aligned along optical axis 40. Optical lens stack 36 includes metasurface optical lens 38. A first lens filter is configured to block light of first predetermined wavelengths from first imaging region 32. A second lens filter is configured to block light of second predetermined wavelengths from second imaging region 34.

Optical lens stack 36 is configured to receive light from a scene aligned along optical axis 40 of optical lens stack 36. Optical lens stack 36 is configured to focus at least a first portion of the received light onto first imaging region 32 of focal plane array 30, thereby forming a first image of the scene. The first image includes first pixel data generated by a first plurality of pixels in first imaging region 32. Metasurface optical lens 38 is configured to split a second portion of the received light and to direct the second portion of the received light to second imaging region 34 of focal plane array 30, thereby forming a second image of the scene. The second image includes second pixel data generated by a second plurality of pixels in second imaging region 34.

Both first and second imaging regions 32, 34 receive light through optical lens stack 36. By sharing optical lens stack 36 between SAL image seeking subsystem 24 and image seeking subsystem 26, the use of separate optical lens stacks for the SAL and image seeking subsystems 24, 26 can be avoided. Shared optical lens stack 36 may advantageously reduce size, weight, and cost of dual-mode seeker 22. In some embodiments, alignment between images received by first and second imaging regions 32, 34 can be improved by sharing most some or all of the components of optical lens stack 36.

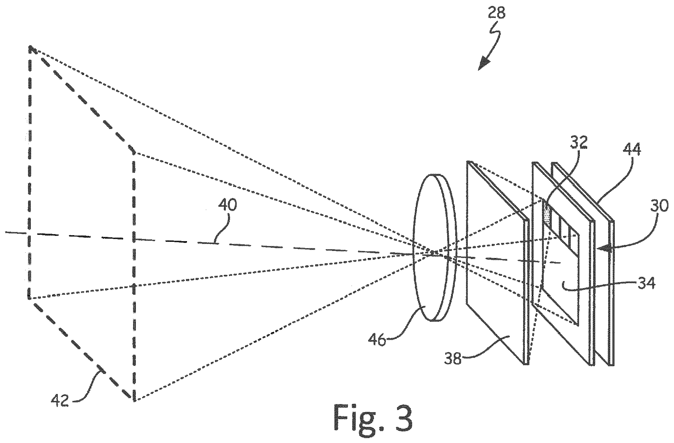

FIG. 3 is a schematic view of an exemplary dual imaging system of a dual mode seeker. In FIG. 3, dual imaging system 28 is shown in isolation, without a housing and without many components of lens stack 36, so as to illustrate an exemplary relationship between metasurface optical lens 38 and first and second imaging regions 32, 34. Dual imaging system 28 includes objective lens 46, metasurface optical lens 38, focal plane array 30 (which includes both first and second imaging regions 32, 34) and ReadOut Integrated Circuit (ROIC) 44. An image is ray traced from imaging plane 42 onto first and second imaging regions 32, 34 of focal plane array 30. Light reflected from the object being imaged, which may be located at a great distance from dual imaging system 28, passes through objective lens 46 and then through metasurface optical lens 38 before being focused upon focal plane array 30. Objective lens 46 may schematically represent all optical components of lens stack 36 along optical axis 40 with the exception of metasurface optical lens 38.

Objective lens 46 projects an image onto focal plane array 30. The image projected onto focal plane array 30 by objective lens 46 may include multichromatic light. Metasurface optical lens 38 may have subwavelength resonant features that cause light from a first portion of the projected image to be split from a second portion. Metasurface optical lens 38 may then direct and/or focus the light from the first portion of the projected image onto first imaging region 32. First imaging region 32 may include a first plurality of pixels to generate first image data for SAL image seeking subsystem 24 (depicted in FIG. 2). Metasurface optical lens 38 may substantially transmit light from the second portion of the projected image therethrough without significantly refracting or diffracting the second portion. Second imaging region 34 may include a second plurality of pixels to generate second image data for passive image seeking subsystem 26 (depicted in FIG. 2).

Metasurface optical lens 38 may include an array of subwavelength resonators that shifts the phase of light passing therethrough between zero and two-pi radians. Light can be phase shifted different amounts at different spatial locations in the plane of metasurface optical lens 38. Subwavelength resonators can be defined with enough degrees of freedom to perform two functions: i) light having wavelengths corresponding to laser radiation 18 of LTD 16 is phase shifted so as to be focused on first imaging region 32; and ii) light having wavelengths not corresponding to laser radiation 18 of LTD 16 is substantially unshifted or is phase shifted so as to be focused on second imaging region 34. In this way, metasurface optical lens 38 performs both a lensing optical operation and a beam splitting optical operation.

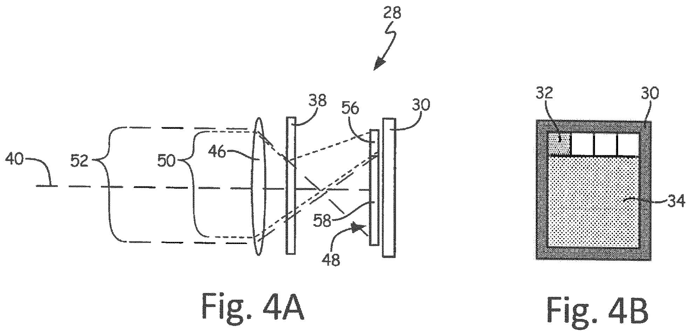

FIGS. 4A-4B are side elevation and plan view schematics of an exemplary dual imaging system of a dual mode seeker. In FIG. 4A, dual imaging system 28 includes objective lens 46, metasurface optical lens 38 focal plane array 30 and optical filter module 48. Optical lens stack 36 receives light from a scene aligned with optical axis 40. Received light may include first portion 50 of periodic laser band light and second portion 52 of S WIR band light.

First portion 50 of the received light from the scene aligned with optical axis 40 is focused by both objective lens 46 and metasurface optical lens 38 onto first portion 32 of focal plane array 30. Optical filter module 48 has first filter region 56 juxtaposed with first imaging region 32. First filter region 56 passes light having wavelengths corresponding to laser radiation 18 of LTD 16, but blocks light having wavelengths significantly different from laser radiation 18 of LTD 16.

Second portion 52 of the received light from the scene aligned with optical axis 40 is focused by objective lens 46 onto second imaging region 34 of focal plane array 30. Metasurface optical lens 38 either substantially passes second portion 52 of received SWIR light reflected from the scene aligned with optical axis 40, or metasurface optical lens 38 contributes to focusing the received SWIR light onto second imaging region 34 of focal plane array 30. Optical filter module 48 has second filter region 58 juxtaposed with second imaging region 34. Second filter region 58 blocks light having wavelengths corresponding to laser radiation 18 of LTD 16 but passes light significantly different from laser radiation 18 of LTD 16.

In FIG. 4B, exemplary focal plane array 30 has been sectioned to include first imaging region 32 and second imaging region 34. First imaging region 32 includes a first plurality of pixels that are configured to provide first image data. Second imaging region 34 includes a second plurality of pixels that are configured to provide second image data. In the depicted embodiment first imaging region 32 is significantly smaller than second imaging region 34. The depicted first imaging region 32 may include fewer pixels than are included in second imaging region. In some embodiments, such a configuration may facilitate fast frame rates of data collection from first imaging region 32, as first imaging region 32 has relatively few pixels to process. In an exemplary embodiment, for example, first imaging region may include a two-dimensional array of pixels, 256 pixels by 256 pixels in size. The second imaging region, for example, may include a two-dimensional array of pixels, 1024 pixels by 1024 pixels in size. If the first imaging region and the second imaging region have the same field of view, each pixel from the first imaging array will contain image data that corresponds to the same region of the scene as sixteen pixels of the second imaging region (i.e., a 4x4 suite of pixels in the second imaging region located in a region of the second imaging region that corresponds to the location of the corresponding single pixel of the first imaging region).

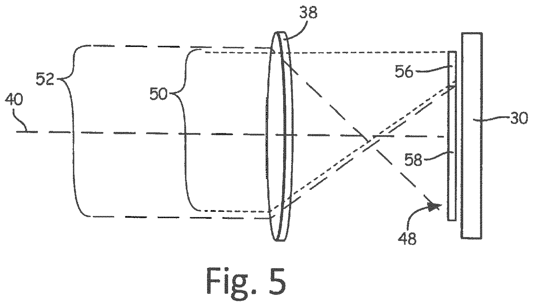

FIG. 5 is a schematic diagram of an exemplary dual imaging system with metasurface optical lens 38 formed on objective lens 46. FIG. 5 is an alternative embodiment to that depicted in FIG. 4. In the FIG. 5 embodiment, dual imaging system 28 includes objective lens 46 having metasurface optical lens 38 thereon. Metasurface optical lens 38 need not be processed on planar surfaces. Thus, existing surfaces traversed by optical axis 40 can provide a substrate for metasurface optical lens 38. Different surfaces along optical axis 40 may require different spatial phase shift relation to achieve the same ends of beam splitting and focusing.

In some embodiments, first imaging region 32 and second imaging region 34 may use different regions of focal plane array 30. Each of first and second imaging regions 32, 34 may correspond to different subsets of pixels of focal plane array 30. Each of first and second imaging regions 32, 34 may provide pixel signals to a common Read Out Integrated Circuit (ROIC) and/or a common image processor. First imaging region 32 may be processed at a higher frame rate than second imaging region 34 so as to synchronize the imager with a periodic pulse of laser radiation 18 emitted from LTD 16. In an exemplary embodiment, field of views for both first and second imaging regions may be the same within manufacturing tolerances. For example, greater than ninety percent of pixels of second region 34 may have pixels in first region 32 that correspond to the same region of a scene being imaged.

In some embodiments, an image correlation system may correlate a first image formed in first imaging region 32 to a second image formed in second imaging region 34. The image correlation system may include a metric calculator configured to generate a pixel metric for each of a first plurality of pixels of first imaging region. In some embodiments, the generated metric may be a signal representative of a light intensity. In some embodiments, a spatial filter may be used to generate the image metrics. The image metric can be used to identify a pixel location within first imaging region that corresponds to a peak reflection signal of laser radiation 18 painting designated target 14.

The Image correlation system may correlate each pixel having a unique row/column address of first imaging region 32 to a set of pixels in second imaging region 34. If both first and second imaging region 32, 34 have the same field-of-view every pixel or the second imaging region 34 can be correlated one of the pixels of first imaging region 32, and vice versa. Such a correlation can be used to hand-off target location information between the SAL imaging and passive imaging modes. For example, a Focal Plane Array (FPA) which has a 1024x1024 second imaging region and a 256x256 first imaging region, can have a correlation map that correlates each unique 4x4 set of pixels in the second imaging region to a unique pixel in the first imaging region.

The image correlation system may include a signal location for determining a location within the second image corresponding to laser radiation 18 reflected off designated target 14. In some embodiments the image correlation system may determine the location as being the pixel having a maximum signal value. In some embodiments, the determined location may be a pixel location of a maximum signal value of a spatially filtered image.

The image correlation system may include a target locator. The target locator may be configured to find a pixel location of first imaging region 32 that corresponds to the same scene location of the determined target location of second imaging region 34. Each of first imaging region 32 and second imaging region 34 may be aligned so as to generate images of the same scene which is aligned with optical axis 40. A mapping between corresponding pixel locations in first and second imaging regions 32, 34 may provide a relation between the determined pixel location of second imaging region 34 and a pixel location of designated target 14 in first imaging region 34.

In an exemplary embodiment, a dual imaging system includes a focal plane array and an optical lens stack. The focal plane array has a first imaging region and a second imaging region. The first imaging region includes a first plurality of pixels. The second imaging region includes a second plurality of pixels. The optical lens stack has a metasurface optical lens having an optical axis. The optical lens stack is configured to receive light from a scene aligned along the optical axis. The optical lens stack is configured to focus at least a first portion of the received light onto the first imaging region of the focal plane array, thereby forming a first image of the scene. The first image includes first pixel data generated by the first plurality of pixels. The metasurface optical lens is configured to split a second portion of the received light and to direct the second portion of the received light to the second imaging region of the focal plane array, thereby forming a second image of the scene. The second image includes second pixel data generated by the second plurality of pixels.

The dual imaging system of the preceding paragraph can optionally include, additionally and/or alternatively, any one or more of the following features, configurations and/or additional components. For example, the dual imaging system may further include a filter configured to substantially block the first portion of the received light from the first imaging region. Any of the foregoing dual imaging systems may further include a filter configured to substantially block the second portion of the received light from the second imaging region.

In any of the foregoing embodiments, a dual imaging system may further include an image correlation system including. The image correlation system may include a metric calculator configured to calculate a plurality of metrics using the second pixel data. Each of the calculated metrics may correspond to a different one of the second plurality of pixels of the second imaging region. The image correlation system may include a signal locator configured to determine, based on the calculated plurality of metrics, a designator pixel location within the second imaging region of the focal plane array. The image correlation system may include a target locator configured to identify a target pixel location within the first imaging region of the focal plane array. The identified target pixel location of the first imaging region may correspond to the determined designator pixel location of the second imaging region.

In any of the foregoing embodiments, the calculated metric may be equal to a metric indicative of intensity of light incident upon the corresponding pixel. In any of the foregoing embodiments, the calculated metric may be based at least in part on a spatial filter calculation. In any of the foregoing embodiments, the determined designator pixel location may be the pixel location corresponding to the calculated metric having the largest value.

A further embodiment of any of the foregoing dual imaging systems, wherein the first imaging region may be separate and distinct from the second imaging region. A further embodiment of any of the foregoing dual imaging systems, wherein the first portion of the received light includes light having a wavelength in the Short Wave InfraRed (SWIR) band of wavelengths. A further embodiment of any of the foregoing dual imaging systems, wherein the first portion of the received light includes light having a wavelength between 900 nanometers and 1700 nanometers. A further embodiment of any of the foregoing dual imaging systems, wherein the second portion of the received light includes light corresponding to a laser wavelength of a laser designator. A further embodiment of any of the foregoing dual imaging systems, wherein the first portion of the received light includes light having a wavelength of 1064 nanometers. A further embodiment of any of the foregoing dual imaging systems, wherein the second portion of the received light is multichromatic, and the second image is a multichromatic image. A further embodiment of any of the foregoing dual imaging systems, wherein the first portion of the received light is narrow-band, and the first image is a narrow-band image.

In an exemplary embodiment, a Dual mode seeker includes an imaging system and a target locating system. The imaging system includes a focal plane array having a passive imaging region and a SAL imaging region. The imaging system includes an optical lens stack having a metasurface optical lens. The optical lens stack is aligned along an optical axis. The optical lens stack is configured to focus multichromatic light passing therethrough onto the passive imaging region of the focal plane array, thereby forming a multichromatic image of a scene aligned with the optical axis. The metasurface optical lens is configured to split a narrow-band portion of the multichromatic light passing therethrough and to direct the narrow-band portion of the multichromatic light to the SAL imaging region of the focal plane array, thereby forming a narrow-band image of the scene aligned with the optical axis. The narrow-band portion of the multichromatic light includes a laser wavelength corresponding to a laser designator. The target locating system includes a laser light signal locator configured to determine a laser designator pixel location within the SAL imaging portion of the focal plane array. The determined laser designator pixel location corresponds to a pixel location upon which a laser light signal reflected from a laser designator illuminated object in the scene is incident. The target locating system includes a target locator configured to identify a location of a target pixel or pixels within the passive imaging region of the focal plane array. The identified target pixel location or pixels locations of the laser designator imaging region corresponds to the determined laser designator pixel location of the laser designator imaging region.

The dual mode seeker of the preceding paragraphs can optionally include, additionally and/or alternatively, any one or more of the following features, configurations and/or additional components. For example, a dual mode seeker may further include a notch filter configured to substantially block the narrow-band portion of the multichromatic light from the passive imaging region. Any of the foregoing dual mode seekers may further include a band-pass filter configured to substantially pass light of the narrow-band portion of the multichromatic light and to substantially block the multichromatic light not within the narrow-band portion from the passive imaging region.

A further embodiment of any of the foregoing dual mode seekers, wherein the multichromatic light may include wavelengths in the Short Wave InfraRed (SWIR) range of light wavelengths. A further embodiment of any of the foregoing dual mode seekers, wherein the wavelengths in the Short Wave InfraRed (SWIR) range of wavelengths include wavelengths between 900 nanometers and 1700 nanometers. A further embodiment of any of the foregoing dual mode seekers, wherein the passive imaging region may include a first two-dimensional array of photosensitive pixels, and the SAL imaging region may include a second two-dimensional array of photosensitive pixels. The first two-dimensional array may have fewer photosensitive pixels than the second two-dimensional array.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A dual imaging system comprising:
a focal plane array (30) having a first imaging region (32) comprising a first plurality of pixels and having a second imaging region (34) comprising a second plurality of pixels; and
an optical lens stack (36) having a metasurface optical lens (38), the optical lens stack (36) configured to receive light from a scene aligned along an optical axis of the optical lens stack (36) and configured to focus at least a first portion of the received light onto the first imaging region (32) of the focal plane array (30) thereby forming a first image of the scene, the first image comprising first pixel data generated by the first plurality of pixels,
wherein the metasurface optical lens (38) is configured to split a second portion of the received light and to direct the second portion of the received light to the second imaging region (34) of the focal plane array (30) thereby forming a second image of the scene, the second image comprising second pixel data generated by the second plurality of pixels.

2. The dual imaging system of claim 1, wherein the first imaging region (32) is separate and distinct from the second imaging region (34).

3. The dual imaging system of claim 1 or 2, wherein the first portion of the received light includes light having a wavelength in the Short Wave InfraRed (SWIR) band of wavelengths, and optionally wherein the first portion (50) of the received light includes light having a wavelength between 900 nanometers and 1700 nanometers.

4. The dual imaging system of any preceding claim, wherein the second portion (52) of the received light includes light corresponding to a laser wavelength of a laser designator, and optionally wherein the second portion (52) of the received light includes light having a wavelength of 1064 nanometers.

5. The dual imaging system of any preceding claim, wherein the first portion (50) of the received light is multichromatic, and the first image is a multichromatic image, and/or
wherein the second portion (52) of the received light is narrow-band, and the second image is a narrow-band image.

6. The dual imaging system of any preceding claim, further comprising a filter configured to substantially block the first portion of the received light from the first imaging region, and/or
further comprising a filter configured to substantially block the second portion of the received light from the second imaging region (34).

7. The dual imaging system of any preceding claim, further comprising:
an image correlation system including:
a metric calculator configured to calculate a plurality of metrics using the second pixel data, each of the calculated metrics corresponding to a different one of the second plurality of pixels of the second imaging region (34);
a signal locator configured to determine, based on the calculated plurality of metrics, a designator pixel location within the second imaging region (34) of the focal plane array (30); and
a target locator configured to identify a target pixel location within the first imaging region (32) of the focal plane array (30), the identified target pixel location of the first imaging region (32) corresponding to the determined designator pixel location of the second imaging region (34).

8. The dual imaging system of claim 7, wherein the calculated metric is equal to a metric indicative of intensity of light incident upon the corresponding pixel, and/or
wherein the calculated metric is based at least in part on a spatial filter calculation.

9. The dual imaging system of claim 7, wherein the determined designator pixel location is the pixel location corresponding to the calculated metric having the largest value.

10. A dual-mode seeker comprising:
an imaging system including:
a focal plane array (30) having a passive imaging region and a Semi-Active Laser (SAL) imaging region; and
an optical lens stack (36) having a metasurface optical lens (38), the optical lens stack (36) aligned along an optical axis, the optical lens stack (36) configured to focus multichromatic light passing therethrough onto the passive imaging region of the focal plane array, thereby forming a multichromatic image of a scene aligned with the optical axis,
wherein the metasurface optical lens (38) is configured to split a narrow-band portion of the multichromatic light passing therethrough and to direct the narrow-band portion of the multichromatic light to the SAL imaging region of the focal plane array (30), thereby forming a narrow-band image of the scene aligned with the optical axis, wherein the narrow-band portion of the multichromatic light includes a laser wavelength corresponding to a laser designator; and
a target locating system including:
a laser light signal locator configured to determine a laser designator pixel location within the SAL imaging region of the focal plane array (30), the determined laser designator pixel location corresponding to a pixel location upon which is incident a laser light signal reflected from a laser designator illuminated object in the scene; and
a target locator configured to identify a location of a target pixel or pixels within the passive imaging region of the focal plane array (30), the identified target pixel location or pixels locations of the SAL imaging region corresponding to the determined laser designator pixel location of the SAL imaging region.

11. The dual-mode seeker of claim 10, further comprising a notch filter configured to substantially block the narrow-band portion of the multichromatic light from the passive imaging region.

12. The dual-mode seeker of claim 10 or 11, further comprising a band-pass filter configured to substantially pass light of the narrow-band portion of the multichromatic light and to substantially block the multichromatic light not within the narrow-band portion from the SAL imaging region.

13. The dual-mode seeker of claim 10, 11 or 12, wherein the multichromatic light includes wavelengths in the Short Wave InfraRed (SWIR) range of light wavelengths, and optionally
wherein the wavelengths in the Short Wave InfraRed (SWIR) range of wavelengths include wavelengths between 900 nanometers and 1700 nanometers.

14. The dual-mode seeker of claim 10, 11, 12 or 13, wherein the passive imaging region comprises a first two-dimensional array of photosensitive pixels, and the SAL imaging region comprises a second two-dimensional array of photosensitive pixels, wherein the first two-dimensional array has fewer photosensitive pixels than the second two-dimensional array.

15. The dual imaging system of any of claims 7 to 9, wherein the generated first pixel data is timed so as to avoid any illumination by the second portion of the received light.
